(19) **Europäisches Patentamt**

**European Patent Office**

**Office européen des brevets**

(11) Veröffentlichungsnummer: **0 262 546 B1**

(12) EUROPÄISCHE PATENTSCHRIFT

(45) Veröffentlichungstag der Patentschrift: **04.09.91**

(21) Anmeldenummer: **87113773.3**

(22) Anmeldetag: **21.09.87**

(51) Int. Cl.⁵: **F24C  1/14**, F24H 3/06

(54) **Raumheizgerät für Kleinräume.**

(30) Priorität: **30.09.86 DE 3633236**

(43) Veröffentlichungstag der Anmeldung:
**06.04.88 Patentblatt  88/14**

(45) Bekanntmachung des Hinweises auf die
Patenterteilung:
**04.09.91 Patentblatt  91/36**

(84) Benannte Vertragsstaaten:
**FR GB IT NL SE**

(56) Entgegenhaltungen:
**EP-A- 0 133 443**
**BE-A- 689 876**
**DE-B- 1 454 295**
**US-A- 3 604 505**

(73) Patentinhaber: **Philipp Kreis GmbH & Co.**
**TRUMA-Gerätebau**
**Wernher-von-Braun-Strasse 12-14**
**W-8011 Putzbrunn(DE)**

(72) Erfinder: **Mossbach, Wilhelm**
**Rotbuchenstrasse 37**
**W-8011 Kirchseeon(DE)**
Erfinder: **Baur, Jörg-Friedrich, Dipl.-Ing.**
**Haferweg 25**
**W-8000 München 81(DE)**
Erfinder: **Pirner, Albert**
**Gottenbrunner Weg 41**
**W-8000 München 82(DE)**

(74) Vertreter: **Hain, Leonhard, Dipl.-Ing.**
**Tal 18/IV**
**W-8000 München 2(DE)**

Rank Xerox (UK) Business Services

**Beschreibung**

Beschreibung

Die Erfindung betrifft ein Raumheizgerät für Kleinräume, insbesondere für fahrbare Räume, wie Wohnwagen, Fahrzeug- und Schiffskabinen od. dgl., gemäß dem Oberbegriff des Patentanspruches 1.

Bei einem Raumheizgerät dieser Art (DE-OS 21 39 504) ist einer insbesondere mit flüssigem Brennstoff befeuerten Brennkammer ein Wärmetauscher zugeordnet, der aus einem einzigen Druckguß- bzw. Spritzgußstück hergestellt ist. Dieser Wärmetauscher weist die Form eines im Querschnitt kreisrunden Rohres auf, von dem innere und äußere Rippen als indirekte Heizflächen abstehen. Durch ein in diesen Wärmetauscher hineinragendes zylindrisches Flammrohr wird eine Umlenkung der aufsteigenden Verbrennungsgase nach unten erzielt. Bei einem anderen Raumheizgerät für Kleinräume (DE-OS 33 21 116) weist der des Flammrohr umgebende ebenfalls zylindrische Wärmetauscher auf einem Großteil seiner Länge einen Wellenmantel auf, dessen Mantelwellen auf den Mantelumfang verteilte, längsgerichtete innere und äußere Wellenkanäle für die am Zylinderkopf umgelenkten Verbrennungsgase sowie für die äußere Heizluft bilden. Diese Mantelwellen vergrößern die aktive, direkte Heizfläche wesentlich. Da die bekannten Wärmtauschermäntel zylinder- oder kegelförmig sind, können sie im Gieß- oder Preßgußverfahren geformt und dadurch einfach und billig hergestellt werden. Auch die Abdichtungsprobleme lassen sich ohne Schwierigkeiten lösen. Andererseits ist bei diesen Heizgeräten in Zylinderform die Heizfläche beschränkt und auch in Verbindung mit einem Flammrohr ist nur eine einzige Umlenkung der Verbrennungsgase erreichbar. Daher ist auch die Heizleistung begrenzt.

Der Erfindung liegt daher die Aufgabe zugrunde, ein Raumheizgerät für Kleinräume nach der Art des Oberbegriffes des Patentanspruches 1 zu schaffen, dessen Wärmetauscher eine vergrößerte Heizfläche aufweist und der auch die Möglichkeit einer mehrfachen Umlenkung des Verbrennungsgasstromes bietet.

Diese Aufgabe wird mit einem Raumheizgerät nach dem Oberbegriff des Patentanspruches 1 erfindungsgemäß durch die kennzeichnenden Merkmale dieses Patentanspruches gelöst.

Durch die erfindungsgemäße Kastenform mit etwa parallelen gewellten Seitenwänden läßt sich auch dieser eine vergrößerte Heizfläche aufweisende Wärmetauscher im Gußverfahren herstellen und durch eine oder mehrere entsprechend ausgebildete Trennwände ein Verbrennungsgaskanal mit einer oder mehreren Umlenkungen der Gasströmung schaffen. Die zweckmäßigerweise gegenüberliegenden Wellenspitzen und Wellentäler der Seitenwände tragen dazu bei, daß innerhalb dieses Verbrennungsgaskanales erweiterte und verengte Strömungsquerschnitte entstehen, die den Gasstrom auffächern und dadurch nicht nur das Strömungsverhalten günstig beeinflußt, sondern auch der Wärmeübergang intensiviert wird. Zudem vergrößern die Wellenkanäle die direkte Heizfläche wesentlich und damit auch die Heizleistung. Die Wellenkanäle bieten ferner die Möglichkeit, Trennwände an günstiger Stelle einzuschieben und dadurch Umlenkkanäle in gewünschtem Maße zu bilden. Ist diese Gußhaube an ihrer Öffnung mit einem Anschlußflansch ausgestattet, dann können vorteilhaft gestaltete Zusatzeinrichtungen in einfacher Weise anmontiert und so das Heizgerät vollendet werden.

Vorteilhafte Weiterentwicklungen der Erfindung sind in Unteransprüchen beansprucht.

Die Erfindung wird nachfolgend anhand eines Ausführungsbeispiels, das auch in der Zeichnung schematisiert dargestellt ist, näher beschrieben. Es zeigen:

Fig. 1    einen Vertikalschnitt durch die Längsmittelebene des Heizgerätes,

Fig. 2    eine Querschnitt nach der Linie II-II der Fig. 1 und

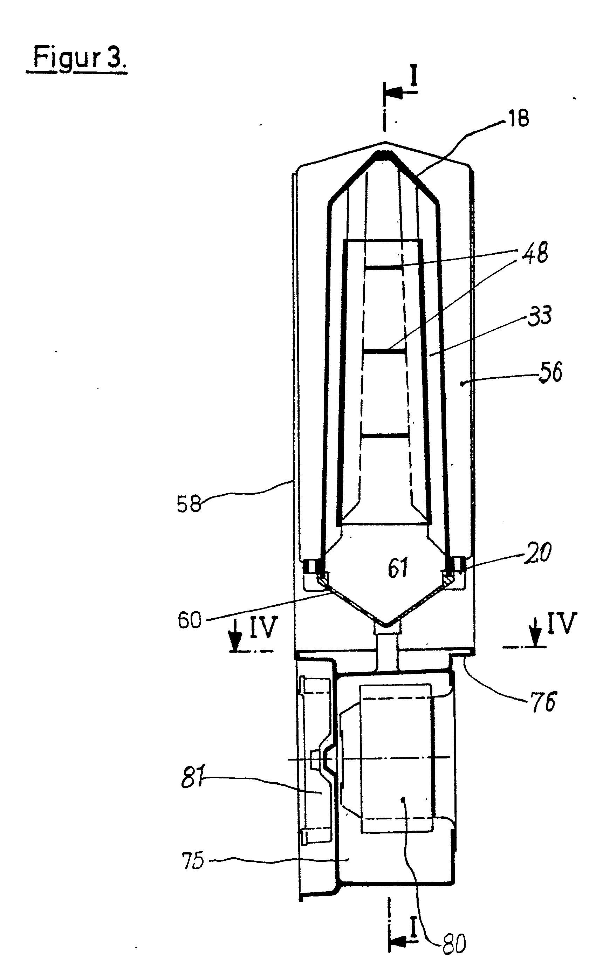

Fig. 3    einen Vertikalschnitt nach der Linie III-III der Fig. 1.

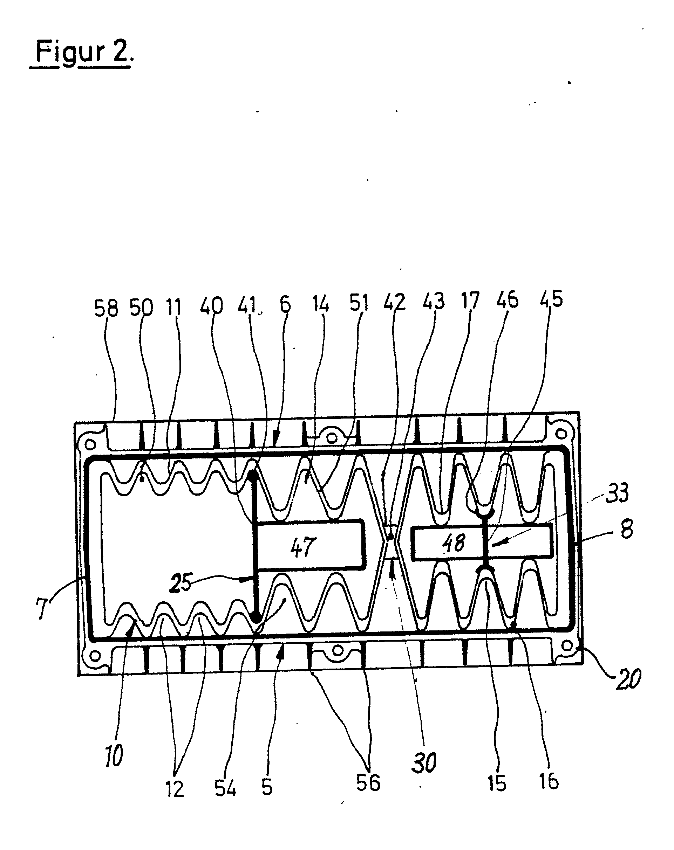

Ein vereinfacht dargestelltes Raumheizgerät besteht im wesentlichen aus einem haubenförmigen Guß-Formstück, einer Gußhaube 1 und einem Ansatzteil 2. Die Gußhaube bildet den Wärmetauscher und sie weist eine Kasten-oder Blockform auf, die im Querschnitt ein längliches Rechteck darstellt, d.h. die Seitenwände 5,6 merklich, im vorliegenden Fall um mehr als das Doppelte breiter als die Stirnwände 7,8 sind. Wie insbesondere aus Fig. 2 ersichtlich ist, sind die gegenüberliegenden Seitenwände 5,6 zu Wellenwänden 10,11 ausgebildet, die aus gleichgerichteten und sich auf die Höhe der Seitenwände erstreckenden Wellen 12 bestehen und innere Wellenkanäle 14 für die Verbrennungsgase und äußere Wellenkanäle 15 für die außen hochsteigende Heizluft bilden. Die nach außen gerichteten Wellenberge 16 liegen auf einer Ebene, während die inneren Wellentäler 17 je nach der Tiefe der Wellen mehr oder weniger in den Wärmetauscher hineinstehen. Die Seiten- und Stirnwände sind an den einen, oberen Enden durch eine Satteldach 18 haubenförmig geschlossen. An ihren unteren Enden ist ein Anschlußflansch 20 zur Verbindung mit dem Ansatzteil 2 ausgebildet. Die Gußhaube 1 umfaßt eine Brennkammer 22, einen anschließenden Verbrennungsraum 23 für die hochsteigenden Verbrennungsgase sowie einen Verbrennungsgaskanal 24 für die abwärtsführenden Gase. Brennkammer und Verbrennungsraum sind mittels einer Trennwand 25 vom Verbrennungsgaskanal abgetrennt. Diese Trennwand erstreckt sich vom Anschlußflansch 20 bis zu einem vorbestimmten Abstand vom Satteldach, um hier eine erste Umlenkung 27 mit einem Durchgang für die Verbrennungsgase in den Verbrennungsgaskanal zu bilden. Ein erster Fallschacht 28 wird durch eine zweite Trennwand 30 abgegrenzt. Diese Trennwand erstreckt sich vom Satteldach bis zum Anschlußflansch 20, so daß eine zweite Umlenkung 31 des Gasstromes unterhalb der Gußhaube erfolgt und in einen aufsteigenden Steigeschacht 32 übergeht. Eine dritte Trennwand 33 trennt diesen Steigeschacht von einem zweiten Fallschacht 34 ab, wobei oben eine dritte Umlenkung 35 freigehalten wird. Der zweite Fallschacht führt schließlich unterhalb der Gußhaube in eine Austrittskammer 37 mit einem Austrittsstutzen 38 zum Anschluß eines Abgaskamines (nicht gezeichnet). Da die Verbrennungsgase von Schacht zu Schacht abkühlen, werden auch die Querschnitte des Gasstromes und der Schächte kleiner. Die daraus sich ergebende Heizflächenverminderung kann zum Teil durch vergrößerte Wellen ausgeglichen werden.

Wie aus Fig. 2 ersichtlich, können die Trennwände aus Einsetzelementen oder auch eingeformt sein. So besteht die Trennwand 25 aus einer Wandplatte 40 und den beiden Seiten-Randwulsten 41, die in gegenüberliegende Wellen eingesteckt und darin festgehalten sind. Die Trennwand 30 zwischen dem ersten Fallschacht 28 und dem Steigeschacht 32 wird durch vertiefte Wellen 42 gebildet, deren Spitzen 43 zusammenstoßen und dadurch die Trennwand ergeben. Die dritte Trennwand 33 überbrückt den Abstand zwischen zwei Wellentälern, weshalb diese aus einer Wandplatte 45 und den Randrillen 46 besteht, die in ihrer Auskehlung den zu übergreifenden Wellentälern angepaßt sind. Wenn das gezeigte Ausführungsbeispiel drei verschiedene Trennwände gebraucht, so schließt dies nicht aus, daß auch nur eine Trennwandart zum Einsatz kommen kann. Um die Ablankung des Gasstromes in die inneren Wellenkanäle 14 zu verstärken, weisen die auswechselbaren bzw. einsetzbaren Trennwände 25 und 33 in die angrenzenden Schächte abstehende Abweiserfortsätze 47 bzw. 48 auf. Weil auf eine solche Abweisung des Gasstromes im Verbrennungsraum 23 verzichtet werden kann, ist die Trennwand 25 nur auf der Fallschachtseite mit diesen Abweiserfortsätzen 47 bestückt. An der Trennwand 33 befinden sich die Fortsätze 48 auf beiden Seiten. Meist werden zwei oder drei Fortsätze auf einer Trennwandseite ausreichen. Wegen dieser Abweiserfortsätze ist den einsetzbaren Trennwänden der Vorzug zu geben.

Die Wellen 50 im Bereich des Verbrennungsraumes sind nicht so tief wie die nachfolgenden Wellen 51 im Verbrennungsgaskanal 24. Bei den hohen Temperaturen im Verbrennungsraum genügen nämlich bereits kleinere Heizflächen für eine optimale Wärmeabgabe. Im nachfolgenden Verbrennungsgaskanal ist es hingegen vorteilhaft, die direkten Heizflächen durch größere Wellen zu vergrößern. Auf diese Weise kann auch bei tieferen Gas-Temperaturen eine im wesentlichen gleichmäßige Wärmeabgabe über die ganzen Seitenwände erreicht werden. Hinzukommt ferner, daß durch die tieferen Wellenkanäle 54 mit den kleineren Abständen zwischen den gegenüberstehenden Wellen eine stärkere Auffächerung des Gasstromes, insbesondere in Verbindung mit den Abweiserfortsätzen, erfolgt und dadurch die Gasströmung vergleichmäßigt und der Wärmeübergang intensiviert wird.

Die Wellenwände 10,11 erweisen sich auch für die außen hochsteigende Heizluft vorteilhaft. Durch an die Wellenberge 16 angeformte Leitlamellen 56 werden zusätzliche indirekte Heizflächen geschaffen und die äußeren Wellenkanäle noch vergrößert, so daß die Heizluftströme fast vollständig von Heizflächen eingeschlossen sind, insbesondere dann, wenn dieser Wärmetauscher noch von einem Außenmantel 58 umgeben ist, der zweckmäßig die Leitlamellenspitzen annähernd oder direkt berührt.

Da die Stirnwände 7,8 beim gezeigten Wärmetauscher verhältnismäßig schmal sind, kann hier auf Wellenkanäle verzichtet werden, die sich bei breiteren Stirnwänden durchaus als vorteilhaft erweisen können. Die Seiten- und Stirnwände erweitern sich zur Öffnung hin zweckmäßig so, daß das Entformen der Gußhaube erleichtert wird.

An die Gußhaube 1 ist an ihren Anschlußflansch 20 das Ansatzteil 2 anmontiert, das die Gußhaube 1 unten abschließt und vorteilhaft aus einer Bodenwanne 60, einer Luftführung 62 und einer Austrittskammer 37 mit anschließendem Austrittsstutzen 38 besteht. Dieses Ansatzteil wird vorteilhaft ebenfalls aus einem Gußstück gefertigt und mit Anschlußelementen für eine gasdichte Verbindung mit der Gußhaube ausgestattet. Die Bodenwanne 60 bildet eine Umlenkkammer 63 für die zweite Umlenkung 31. Gegenüber der Austrittskammer 37 ist sie durch eine Zwischenwand 61 abgetrennt. Die Luftführung 62 wird von einem eingeformten Kaminstutzen 64 gebildet, der die Zweitluft zuführt und einen Brenner 67 umgibt. Zweckmäßig wird ein Brennergrill 68 mit einer Abdeckung 69 der Zweitluftführung und mit letzterer mit der Bodenwanne einstückig geformt. Auch ein Brennermischrohr 70 kann mitgegossen werden.

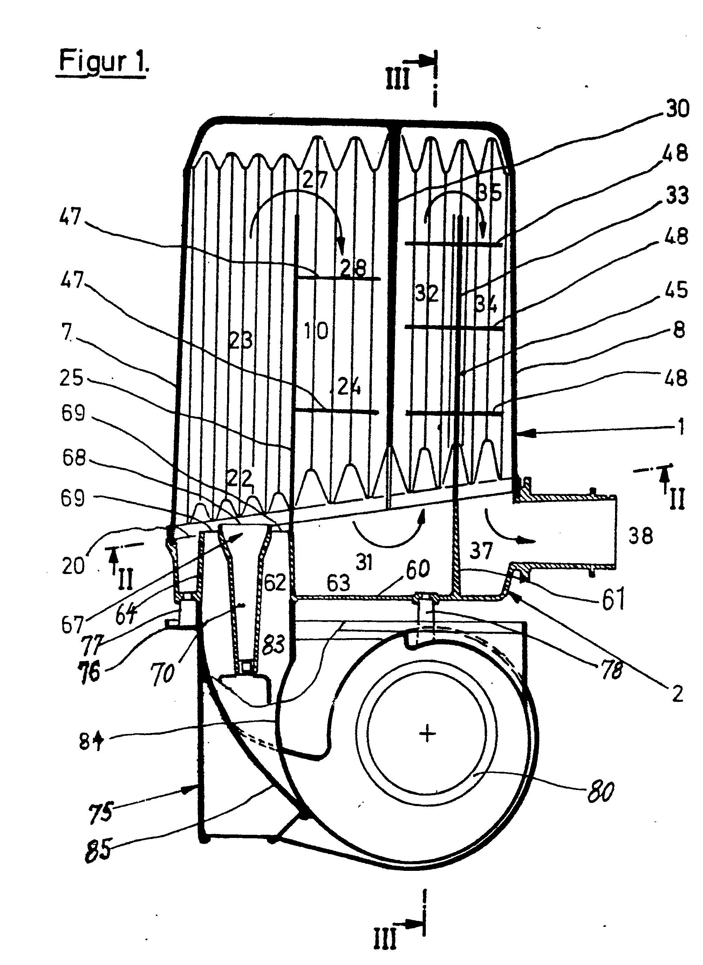

Vorteilhaft ist es, wenn, wie aus Fig. 1 zu sehen ist, der Ahschlußflansch 20 der Gußhaube 1 von der Brennkammerseite zum Abgasaustritt hin ansteigt, dann kann nämlich der Austrittsstutzen 38 in vollem Umfang als ein Teil des Ansatzteiles hergestellt werden. Das eigentliche Heizgerät setzt sich dann aus zwei Guß-Formstücken zusammen.

Um einen günstigen Zweitluftstrom, der auch die Verbrennungsgase mit einer vorteilhaften Geschwindigkeit durch den mehrfach umgelenkten Verbrennungsgaskanal strömen läßt, aufrechtzuerhalten, ist ein Gebläse vorgesehen, das in einem Gebläsegehäuse 75 untergebracht ist. Dieses Gebläsegehäuse, ebenfalls ein Gußstück, ist mit seinem Flansch 76 am Ansatzteil 2 des Heizgerätes angeschraubt, wozu neben dem Ecksockel 77 noch ein Zentralsockel 78 vorgesehen ist. Der Gehäuseflansch ist außerdem so gestaltet, daß darauf der Außenmantel 58 aufgesetzt und dadurch eine abgeschlossene Luftführung für die Heizluft gebildet werden kann. Zweckmäßig sind im Gebläsegehäuse ein Radialgebläse 80 für die Heizluft und ein weiteres Gebläse 81 für die Zweitluft untergebracht. Ein zum Anschluß an den Kaminstutzen 64 des Ansatzteiles ausgebildeter Kanal 83 (Fig. 1) steht also mit dem Gebläse 81 in Verbindung, während der aus dem Gebläse 80 austretende Luftstrom durch eine Mittel-Ablenkwand 84 und den Seiten-Ablenkwänden 85 nach oben in den Heizraum umgelenkt wird. Ein verstärkter Luftstrom wird dabei an der Brennkammer 22 und dem Verbrennungsraum 23 vorbeigeführt, um diese durch vermehrte Wärmeaufnahme stärker abzukühlen.

Die Erfindung beschränkt sich nicht auf das Ausführungsbeispiel. So kann die Gußhaube im Querschnitt auch andere Seitenverhältnisse mit breiteren Stirnwänden aufweisen. Die Anzahl der Fallschächte mit den abwechselnden Steigeschächten kann sich ebenfalls verändern. Schließlich ist das Gerät auch nicht auf eine stehende, also vertikale Einsatzstellung beschränkt. Ist durch ein oder mehrere Gebläse Vorsorge getroffen, daß eine ausreichende Zwangsströmung für die Verbrennungsgase und die Heizluft gewährleistet ist, dann ist auch eine geneigte oder horizontale Lage des Gerätes möglich. Das Heizgerät kann auch ohne Gebläse oder mit jeder anderen geeigneten Gebläseart betrieben werden. Auch ein Einsatz ohne Außenmantel ist möglich.

## Patentansprüche

1. Raumheizgerät für Kleinräume, insbesondere für fahrbare Räume, wie Wohnwagen, Fahrzeug- und Schiffskabinen od. dgl., mit einem Wärmetauscher aus einem haubenförmigen Gußstück (1) mit einem Wellenmantel aus längsgerichteten inneren und äußeren Wellenkanälen (14,15) zur Führung der Verbrennungsgase sowie der Heizluft, einer einem Verbrennungsraum vorgelagerten Brennkammer (22) mit einem Brenner (67) sowie einer Zuführeinrichtung für die Verbrennungsluft und einem an den Verbrennungsraum anschließenden Verbrennungsgaskanal (24), an dessen Ende ein Austrittsstutzen (38) für die Abgase ausgebildet ist, dadurch gekennzeichnet, daß die Gußhaube (1) im wesentlichen Kasten- oder Blockform aufweist, deren gegenüberliegende Seitenwände (5,6) als Wellenwände (10,11) ausgebildet sind, eine zur Abgrenzung des Verbrennungsraumes (23) vom Verbrennungsgaskanal (24) an gegenüberliegenden Wellenkanälen (14,15) ausgebildete Trennwand (25) zur Bildung eines Fallschachtes (28) mit einer ersten Umlenkung (27) vorgesehen und im Verbrennungsgaskanal mindestens eine weitere Trennwand (30,33) zur Bildung mindestens eines weiteren Fall- oder Steigeschachtes (34,32) mit mindestens einer weiteren Umlenkung (31,35) angeordnet ist.

2. Heizgerät nach Anspruch 1, dadurch gekennzeichnet, daß die Wellenkanäle (50) im Bereich des Verbrennungsraumes eine geringere Tiefe als die Wellenkanäle (51) in den nachfolgenden Bereichen aufweisen.

3. Heizgerät nach Anspruch 1 oder 2, dadurch gekennzeichnet, daß eine oder mehrere der Trennwände (30) von aneinanderstoßenden Wellenspitzen (43) der gegenüberliegenden Seitenwände gebildet sind.

4. Heizgerät nach einem der Ansprüche 1 bis 3, dadurch gekennzeichnet, daß eine oder mehrere der Trennwände (25) von einer Wandplatte (40,45) gebildet sind.

5. Heizgerät nach einem der Ansprüche 1 bis 4, dadurch gekennzeichnet, daß die Trennwände (25,33) mit mindestens einem Abweiserfortsatz (47,48) ausgestattet sind, der in einen angrenzenden Strömungskanal zur Ablenkung des Gasstromes an die Seitenwände hineinsteht.

6. Heizgerät nach einem der Ansprüche 1 bis 5, dadurch gekennzeichnet, daß die Gußhaube (1) an ihrer Öffnung einen Anschlußflansch (20) zur Befestigung eines einen Brenner (67) sowie eine Luftzufuhr umfassenden Ansatzteiles (2) aufweist, dieser Anschlußflansch (20) von der Brennkammerseite (22) zur Austrittsseite hin allmählich ansteigt und der Austrittsstutzen (38) im Ansatzteil (2) ausgebildet ist.

7. Heizgerät nach Anspruch 6, dadurch gekennzeichnet, daß der an der Gußhaube (1) befestigte Ansatzteil (2) eine Bodenwanne (60) mit einer Umlenkkammer (63), eine Austrittskammer (37) mit dem Austrittsstutzen (38) und einen Luftführungs-Kamin (64) aufweist.

8. Heizgerät nach Anspruch 7, dadurch gekennzeichnet, daß der an der Gußhaube (1) befestigte Ansatzteil (2) um ein Gebläsegehäuse (75) für ein Radialgebläse (80,81) erweitert ist.

9. Heizgerät nach einem der Ansprüche 1 bis 8, dadurch gekennzeichnet, daß an den nach außen ragenden Wellenbergen (16) nach außen abstehende Leitlamellen (56) vorgesehen sind.

10. Heizgerät nach einem der Ansprüche 1 bis 9, dadurch gekennzeichnet, daß ein die Gußhaube (1) und den Ansatzteil (2) umgebender Außenmantel (58) vorgesehen ist.

## Claims

1. Room heating device for small rooms, in particular for mobile enclosures such as caravans, vehicle and ships cabins or the like, comprising a heat exchanger consisting of a hood-shaped cast member (1) with a corrugated casing of longitudinally oriented inner and outer corrugation channels (14, 15) for ducting both combustion gases and heating air, a burner chamber (22), located in front of a combustion chamber, and having a burner (67) as well as supply means for the combustion air, and a combustion-gas channel (24) which is connected to the combustion chamber and at the end of which an outlet socket (38) for the waste gases is formed, characterised in that the case hood (1) is substantially box- or block-shaped with its opposite side walls (5, 6) formed as corrugated walls (10, 11), a separating wall (25) for separating the combustion chamber (23) from the combustion-gas channel (24) is provided between opposing corrugated channels (14, 15) so as to form a drop shaft (28) with a first diversion (27), and at least one further separating wall (30, 33) is arranged in the combustion-gas channel for forming at least one further drop or rise shaft (34, 32) with at least one further diversion (31, 35).

2. Heating device according to claim 1, characterised in that the depth of the corrugation channels (50) in the area of the combustion chamber is less than that of the corrugation channels (51) in the adjacent areas.

3. Heating device according to claim 1 or 2, characterised in that one or several of the separating walls (30) are formed by corrugation peaks (43) of opposite side walls adjoining one another.

4. Heating device according to one of claims 1 to 3, characterised in that one or several of the separating walls (25) are formed by a wall panel (40, 45).

5. Heating device according to one of claims 1 to 4, characterised in that the separating walls (25, 33) are fitted with at least one deflector extension (47, 48) which intrudes into one adjacent flow channel for the purpose of diverting the gas flow towards the side walls.

6. Heating device according to one of claims 1 to 5, characterised in that the cast hood (1) has at its opening a connecting flange (20) for mounting an attachment (2) comprising a burner (67) and an air-duct, in that this connecting flange (20) gradually slants upwards from the burner-chamber side (22) towards the outlet side, and in that the outlet socket (38) is arranged in the attachment (2).

7. Heating device according to claim 6, characterised in that the attachment (2), which is mounted onto the case hood (1), comprises a base trough (60) including a diversion chamber (63), an outlet chamber (37) with the outlet socket (38) and an air-ducting flue (64).

8. Heating device according to claim 7, characterized in that the attachment (2), which is mounted onto the case hood (1), is extended by a blower housing (75) of a radial blower (80, 81).

9. Heating device according to one of claims 1 to 8, characterized in that the outward pointing corrugation peaks (16) are provided with outwardly extending ducting lamellars (56).

10. Heating device according to one of claims 1 to 9, characterised in that an outer casing (58) is provided which surrounds the case hood (1) and the attachment (2).

## Revendications

1. Appareil de chauffage pour petits locaux, en particulier pour des locaux mobiles, tels que des caravanes, des cabines de véhicules ou de bateaux ou analogues, avec un échangeur de chaleur constitué par une pièce (1) venue de coulée en forme de coiffe avec une enveloppe ondulée formée de canaux (14, 15) d'onde intérieurs et extérieurs orientés dans le sens de la longueur pour conduire les gaz de combustion ainsi que l'air de chauffage, une chambre (22) à brûler avec un brûleur (67), suivie d'une chambre de combustion, ainsi qu'un dispositif d'alimentation pour fournir l'air comburant et un canal (24) pour gaz de combustion faisant suite à la chambre de combustion et à l'extrémité duquel est façonnée une tubulure (38) pour la sortie des gaz brûlés, caractérisé par le fait que la coiffe (1) moulée présente une forme essentiellement en caisson ou en bloc dont les parois (5, 6) latérales se faisant face sont réalisées sous la forme de parois (10, 11) ondulées, une cloison séparative (25) réalisée pour délimiter la chambre (23) de combustion par rapport au canal (24) des gaz de combustion est prévue pour former un puits (28) de descente avec une première déviation (27) et au moins une autre cloison séparative (30, 33) est agencée dans le canal des gaz de combustion pour former au moins un puits (34, 32) supplémentaire de descente ou de remontée avec au moins une autre déviation (31, 35).

2. Appareil de chauffage suivant la revendication 1, caractérisé par le fait que les canaux (50) ondulés présentent dans la zone de la chambre de combustion une profondeur plus petite que les canaux (51) ondulés dans les zones suivantes.

3. Appareil de chauffage suivant la revendication 1 ou 2, caractérisé par le fait qu' une ou plusieurs des cloisons séparatives (30) sont formées par des crêtes (43) d'onde sur les parois latérales en face l'une de l'autre qui viennent se toucher l'une l'autre.

4. Appareil de chauffage suivant l'une des revendications 1 à 3, caractérisé par le fait qu'une ou plusieurs des cloisons séparatives (25) sont formées par une plaque (40, 45) de paroi.

5. Appareil de chauffage suivant l'une des revendications 1 à 4, caractérisé par le fait que les cloisons séparatives (25, 33) sont pourvues d'au moins un prolongateur (47, 48) en chicane qui s'engage dans un canal d'écoulement avoisinant pour dévier le flux des gaz sur les parois latérales.

6. Appareil de chauffage suivant l'une des revendications 1 à 5, caractérisé par le fait que la coiffe (1) moulée présente à son orifice une bride (20) de raccordement pour la fixation d'une partie (2) à raccorder comprenant un brûleur (67), ainsi qu'un dispositif d'amenée d'air, que ladite bride (20) de raccordement remonte peu à peu depuis le côté de la chambre (22) à brûler en direction du côté de la sortie et que la tubulure (38) de sortie est façonnée à même et dans la partie (2) à raccorder.

7. Appareil de chauffage suivant la revendication 6, caractérisé par le fait que la partie (2) à raccorder, fixée sur la coiffe (1) moulée, présente un carter (60) formant le fond avec une chambre (63) de déflexion, une chambre (37) de sortie avec la tubulure (38) de sortie et une cheminée (64) d'arrivée d'air.

8. Appareil de chauffage suivant la revendication 7, caractérisé par le fait que la partie (2) à raccorder fixée sur la coiffe (1) moulée est agrandie à concurrence d'une carcasse (75) de soufflante pour une soufflante radiale (80, 81).

9. Appareil de chauffage suivant l'une des revendications 1 à 8, caractérisé par le fait que des ailettes (56) directrices faisant saillie vers l'extérieur sont prévues sur les crêtes (16) d'onde qui s'avancent vers l'extérieur.

10. Appareil de chauffage suivant l'une des revendications 1 à 9, caractérisé par le fait qu'une chemise (58) extérieure est prévue qui entoure la coiffe (1) moulée et la partie (2) à raccorder.

## Figur 1.

## Figur 2.

## Figur 3.